# EUROPEAN PATENT SPECIFICATION

(11) **EP 1 488 035 B1**
(45) Date of publication and mention of the grant of the patent: **08.02.2017**
(21) Application number: 03715917.5
(22) Date of filing: 25.03.2003
(51) Int. Cl.: D06F 37/04, F16D 1/06, B29C 33/12, B29C 45/14, F16D 1/05, F16D 1/10

(54) **A DRUM**
TROMMEL
TAMBOUR

(30) Priority: 26.03.2002 TR 200200808
(43) Date of publication of application: 22.12.2004
(73) Proprietor: Arçelik A.S., 81719 Istanbul (TR)
(72) Inventor: ÖZTÜRK, Umud Esat, 34950 Istanbul (TR); YILDIRIM, Ibrahim, 34950 Istanbul (TR)
(86) International application number: PCT/TR2003/000028
(87) International publication number: WO 2003/080915

(56) References cited:
- WO-A-03/097919
- DE-A- 2 225 780
- DE-B- 1 236 457
- DE-U- 1 898 919

## Description

This invention is related to a drum for washing machines that comprises a torque transmitter to transmit the motor drive power.

In the state of the art, washing machines, preferably the laundry washing machines include a fixed tub and a drum, which rotates inside the tub. Problems arise in the transmission of torque from the motor during the rotation of the drums which are made of non-metal, for example plastic material instead of commonly used metal material, because the total center of gravity of the rotating objects, around the axis of the shaft of the drum moves away from the axis of rotation during the washing, as a result of the unbalanced distribution of the laundry inside the rotating drum. Due to this unbalance, a high amount of centrifugal force is created and which in return causes problems in the resistance of the components of the entire laundry machine and especially the resistance of the fixed tub and the rotating drum. On the other hand, strengthening the drum/shaft counting required, ensuring instant right and left rotations of the drum.

In European Patent No. 0472840 it is disclosed that during the production of the drum plastic material will be injected, after the shaft is placed into the mould.

DE 2 225 780 A1 discloses a drum according to the preamble of claim The object of this invention is to realize a drum for washing machines, preferably made of plastic, which includes a torque transmitter, integrated thereto to distribute drive power received from a motor to the entire drum, rotating around its central axis.

The drum, realized to attain the object of this invention, has been illustrated in the attached drawings wherein;

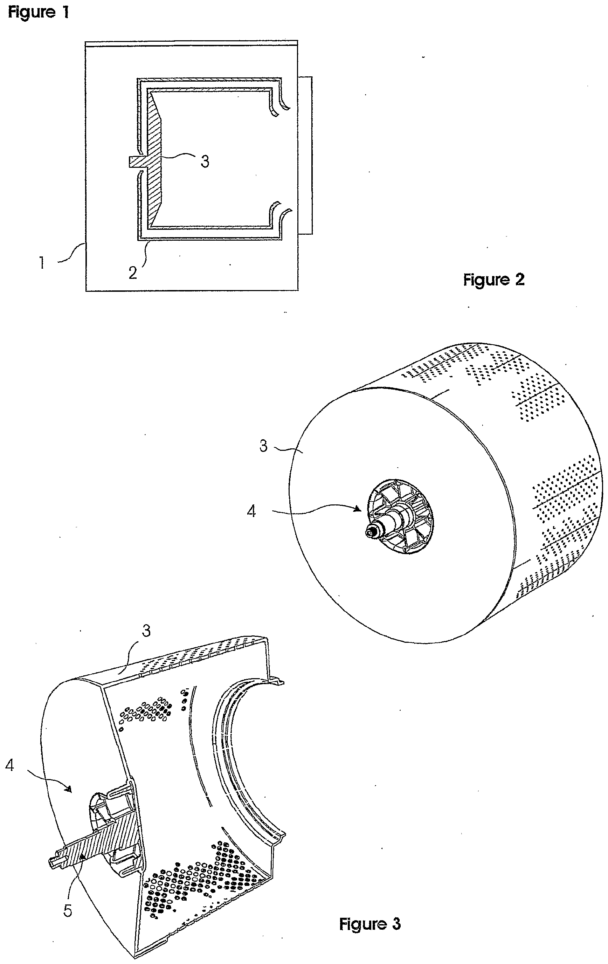

Figure 1 is the schematic view of a washing/drying machine, including a drum and a tub.
Figure 2 is the three dimensional view of the drum including a torque distributor.
Figure 3 is the perspective cross-sectional view of a drum including a torque distributor.

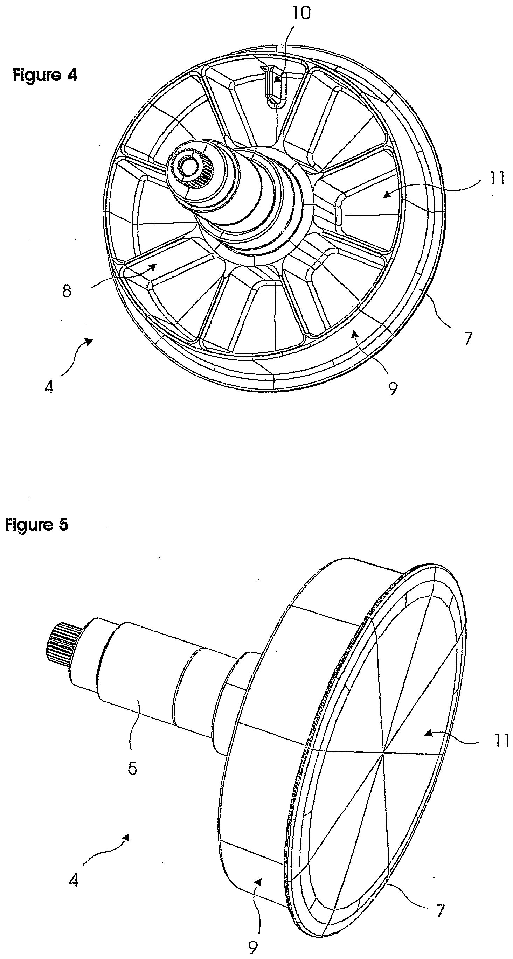

Figure 4 is the three dimensional back view of a torque transmitter.
Figure 5 is the three dimensional side view of a torque transmitter.

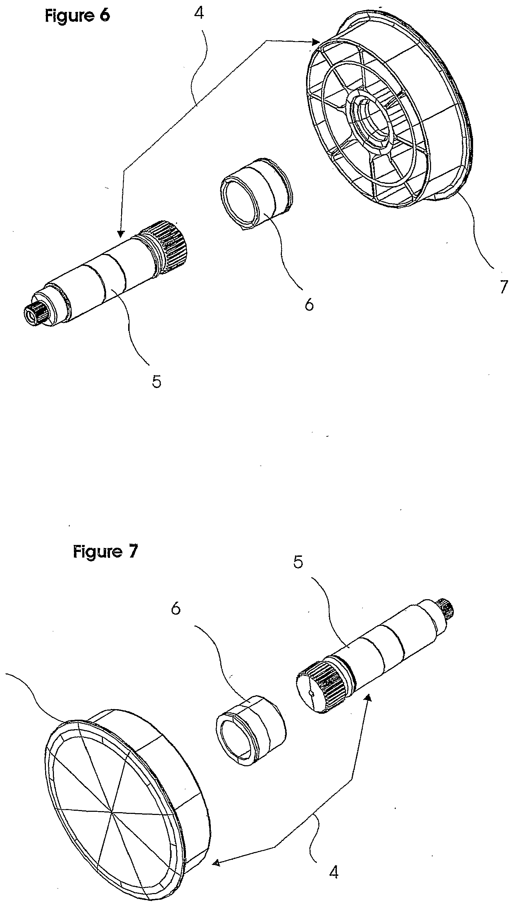

Figure 6 is the exploded back view of a torque transmitter including a shaft, a bushing and a torque distributor.
Figure 7 is the exploded front view of a torque transmitter including a shaft, a bushing and a torque distributor.

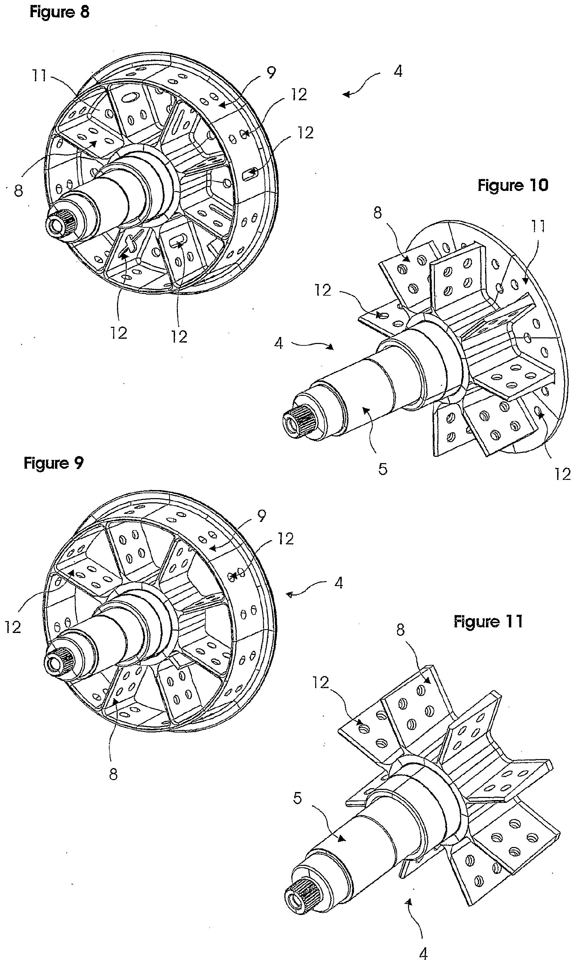

Figure 8 is the three dimensional back view of a torque transmitter, including angular transmitter support elements and circular transmitter support element and perforations on the plate.
Figure 9 is the three dimensional rear view of a torque transmitter, without a plate and which includes the angular transmitter support elements and circular transmitter support element.
Figure 10 is the three dimensional back view of a torque transmitter, without a circular transmitter support element and on the angular transmitter support element.
Figure 11 is the three dimensional back view of a torque transmitter, without a circular transmitter support element and a plate and perforations on angular transmitter support elements.
Figure 12a is the three dimensional view of a torque transmitter in the shape of a triangular prism, having perforated recesses and protrusions on it.
Figure 12b is the exploded view of a drum having a torque transmitter in the shape of a triangular prism, with perforated recesses and protrusions and a rear surface with recesses and protrusions in the shape of triangular prisms.
Figure 13a is the three dimensional view of a torque transmitter including a cavity and several angular transmitter support elements, attached to a plate, with a diameter smaller than the drum.
Figure 13b is the three dimensional view of a torque transmitter including a cavity and several angular transmitter support elements, attached to a plate with the same diameter of the drum.

The components shown in the drawings have been numbered as follows:
1. Washing/drying machine
2. Tub
3. Drum
4. Torque transmitter
5. Shaft
6. Bushing
7. Torque distributor
8. Angular transmitting support element
9. Circular transmitting support element
10. Mould positioning extension
11. Plate
12. Perforations
13. Recess
14. Protrusion
15. Cavity

The washing/drying machines (1), preferably front loading washing machines comprise a motor which provides the operation, a fixed tub (2), into which the washing fluid is flown, and a drum (3) rotated by the motor around the axis of the machine within the tub (2) for the laundry to be placed.

The drum (3) is made of a non-metal material preferably a plastic material, which does not have a good adhesion to metal.

The drum (3) includes a torque transmitter (4) on its rear wall which transmits the drive power received from the motor for rotation. The torque transmitter (4), comprises a shaft (5), driven by the motor and a torque distributor (7) which distributes the drive power, received from the shaft (5) to the drum as a whole (3), by the help of drum's rear wall (3).

The torque transmitter (4) is fully or partially inserted into the rear wall of the drum (3), in such a manner that it will not separate from the drum (3).

The torque distributor (7) comprises a mould positioning extension (10), to allow the torque transmitter (4), to be positioned and inserted into the right place in the mould in which the drum will be produced.

In the preferred embodiment, the drum (3) is produced by plastic injection moulding method. The torque transmitter (4) is placed into the mould, by the help of the mould positioning extension (10) while the drum (3) is being produced. The plastic material is injected into the mould and the integration of the torque transmitter (4) onto the rear wall of the drum (3) is provided.

The torque distributor (7) comprises several angular transmitting support elements (8) to provide the drive power received from the motor by the help of the shaft (5) and to be transmitted to the whole of the drum (3), by the help of the drum's rear wall where the shaft (5) is present, and towards the sides.

The torque distributor (7), includes a plate (11), with either a straight or a curved surface to transmit the drive power received from the motor by means of the shaft (5) to whole drum (3), by the help of the rear wall of the drum (3).
In another embodiment of the invention, the torque distributor (7) includes one or more circular transmitting support elements (9), which transmit the drive power received by means of the shaft (5) from the motor, to the whole drum (3). By means of the rear wall of the drum (3) the material, which forms the drum (3), shrinks when it transforms to the solid phase from the liquid phase during the production of the drum (3), whereas the torque distributor (7) does not exhibit any shrinkage at all. Thus, circular transmitter support element (9) prevents the drum (3) to crack and becoming useless while it is taken out of the mould. The circular transmitting support element (9) is preferably used together with the plate (11) and/or the angular transmitting support element (8).
In another embodiment of the invention, the angular transmitting support element (8) and/or the circular transmitting support element (9), and/or the connecting plate (11) comprise one or more perforations (12) to prevent the torque distributor (4) separate from the drum (3) by releasing the material surrounding the torque distributor (7) while the torque transmitter rotates the drum.

In another embodiment of the invention, the plate (11) comprises several recesses (13) and protrusions, preferably in a form to match the shape of the rear wall of the drum (3), which provides the functions of the angular transmitting support element (8) and/or the circular transmitter support element (9).

In another embodiment of the invention, the plate (11) includes one or more cavities (15) on it. In this embodiment, the angular transmitting supports (8), positioned on the side where the cavities (15) are provided to connect the plate (11) and the shaft (5) together.

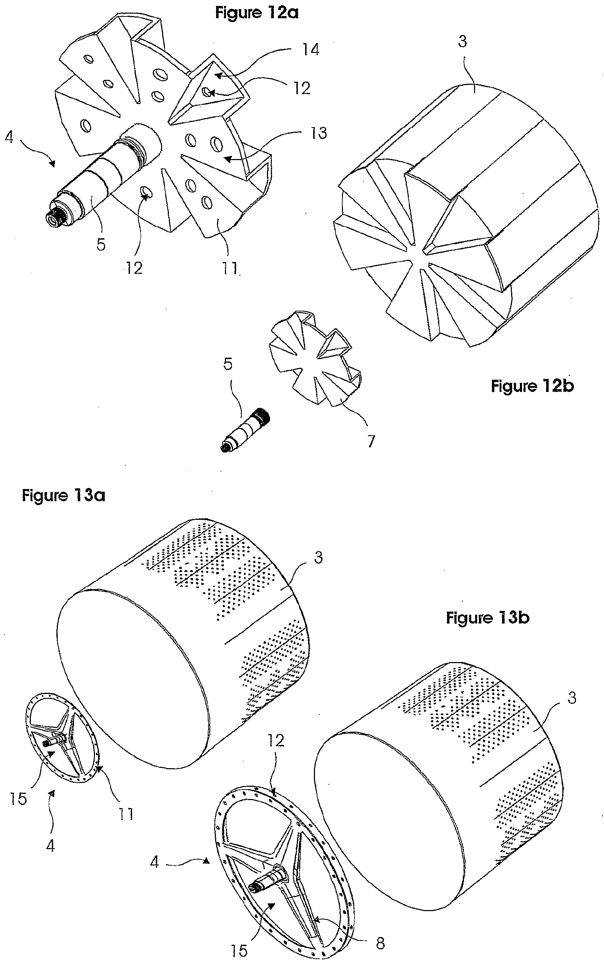

The dimension of the torque transmitter (4) may vary according to its placement position and size of the drum (3). A torque transmitter (4), which is of the same diameter with the drum (3), can be integrated into the rear wall of the drum. On the other hand, the torque transmitter (4) may be of smaller diameter than the diameter of the drum made of materials of various structure and size (Fig. 13a, 13b).

The torque distributor (7) is produced preferably of aluminum material to reduce weight and to increase resistance, whereas the shaft (5) is produced preferably of steel so as not to be affected by the torque values that are exerted on it.

In another embodiment of the invention, the torque transmitter (4), includes a bushing (6) having a smooth surface and preferably made of brass which provides the shaft (5) and the torque distributor (7), to be installed onto each other or which provides the formation of a step on the shaft (5).

In another embodiment, the torque distributor (7) and the shaft (5) are produced as a single piece to form the torque transmitter (4).

## Claims

1. A drum (3) to place laundry and washing liquid and being rotated by a motor around its central axis in a tub (2) for washing/drying machines, comprising a torque transmitter (4) comprising a shaft (5), which is driven by a motor and a torque distributor (7) distributing the shaft drive to the whole drum (3), produced so as not be separated from the material and coated thereof partially or fully embedded into the rear wall of the drum and produced as a single piece, wherein the torque distributor (7), which transmits motor drive power via the shaft (5) to the whole drum (3), with the help of the rear wall, includes several angular transmitting support elements (8), which extend from the center where the shaft (5) is placed towards the sides, **characterized in that** the torque distributor (7) comprises a plate (11) to transmit motor drive power, via the shaft (5), to the whole drum (3) with the help of its rear wall.

2. A drum (3), as defined in claim 1, **characterized in that** the torque distributor (7), which transmits motor drive power, via the shaft (5), to the whole drum (3), with the help of its rear wall, includes one or more circular transmitting support elements (9) which prevent the cracking of the material forming itself, during the production while the material transforms from liquid phase to the solid phase.

3. A drum (3), as defined in Claim 1 to 2, **characterized by** the torque transmitter (4), having one or more perforations (12), on the angular transmitting support element (8) and/or circular transmitting support element (9) and/or the connecting plate (11), to ensure that the torque distributor (7), does not release and separate from the material forming and surrounding itself (7).

4. A drum (3) as defined in Claim 1 to 3, **characterized in that** the torque transmitter (4), includes a mould positioning extension (10), on the torque distributor (7), to ensure its right positioning in the mould.

5. A drum (3), as defined in Claim 1 to 4, **characterized in that** the torque transmitter (4) comprises a bushing (6) preferably made of brass and having a smooth surface to provide the installation of the shaft (5) and the torque distributor (7) onto each other or to provide the formation of a step on the shaft (5), to ensure placing them onto the tub (2).

6. A drum (3), as defined in Claim 1, **characterized in that** the plate (11) comprises several recesses (13) to transmit the motor drive power with the help of the shaft (5) to the whole drum (3).

7. A drum (3), as defined in Claim 6, **characterized by** a plate (11) comprising several protrusions (14) to transmit the motor drive power with the help of the shaft (5) to the whole drum (3).

8. A drum (3), as defined in Claim 1 to 7, which is made of plastic material.

## Patentansprüche

1. Trommel (3) zum Hineingeben von Wäsche und Waschflüssigkeit, die durch einen Motor um ihre Zentralachse in einem Waschbehälter (2) für Wasch-/Trockenmaschinen gedreht wird, umfassend eine Drehmomentübertragungsvorrichtung (4), die eine Welle (5) umfasst, die durch einen Motor angetrieben wird, und eine Drehmomentverteilungsvorrichtung (7), die den Wellenantrieb auf die gesamte Trommel (3) verteilt und derart hergestellt ist, dass sie nicht von dem Material zu trennen ist und damit beschichtet ist, und teilweise oder vollständig in die Rückwand der Trommel eingebettet ist und als ein einzelnes Stück hergestellt ist, wobei die Drehmomentverteilungsvorrichtung (7), die die Motorantriebskraft mithilfe der Rückwand über die Welle (5) auf die gesamte Trommel (3) überträgt, mehrere winkelige Übertragungsträgerelemente (8), die sich von der Mitte erstrecken, wo die Welle (5) zu den Seiten hin angeordnet ist,
**dadurch gekennzeichnet, dass** die Drehmomentverteilungsvorrichtung (7) eine Platte (11) zum Übertragen der Motorantriebskraft über die Welle (5) auf die ganze Trommel (3) mithilfe der Rückwand derselben umfasst.

2. Trommel (3) nach Anspruch 1, **dadurch gekennzeichnet, dass** die Drehmomentverteilungsvorrichtung (7), die die Motorantriebskraft über die Welle (5) auf die ganze Trommel (3) mithilfe der Rückwand derselben überträgt, ein oder mehrere kreisförmige Übertragungsträgerelemente (9) aufweist, die das Bilden von Rissen des Materials während der Herstellung verhindert, während das Material aus der flüssigen Phase in die feste Phase übergeht.

3. Trommel (3) nach Anspruch 1 bis 2, **dadurch gekennzeichnet, dass** die Drehmomentübertragungsvorrichtung (4) eine oder mehrere Perforationen (12) an dem winkeligen Übertragungsträgerelement (8) und/oder kreisförmigen Übertragungsträgerelement (9) und/oder der Verbindungsplatte (11) aufweist, um sicherzustellen, dass die Drehmomentverteilungsvorrichtung (7) sich nicht von dem Material löst und trennt, das sie (7) bildet und umgibt.

4. Trommel (3) nach Anspruch 1 bis 3, **dadurch gekennzeichnet, dass** die Drehmomentübertragungsvorrichtung (4) eine Formpositionierungsverlängerung (10) an der Drehmomentverteilungsvorrichtung (7) aufweist, um ihre richtige Positionierung in der Form sicherzustellen.

5. Trommel (3) nach Anspruch 1 bis 4, **dadurch gekennzeichnet, dass** die Drehmomentübertragungsvorrichtung (4) eine Buchse (6) umfasst, die vorzugsweise aus Messing hergestellt ist und eine glatte Oberfläche aufweist, um die Installation der Welle (5) und der Drehmomentverteilungsvorrichtung (7) aneinander zu ermöglichen oder das Bilden einer Stufe an der Welle (5) zu ermöglichen, um das Anordnen derselben am Waschbehälter (2) sicherzustellen.

6. Trommel (3) nach Anspruch 1, **dadurch gekennzeichnet, dass** die Platte (11) mehrere Aussparungen (13) aufweist, um die Motorantriebskraft mithilfe der Welle (5) auf die gesamte Trommel (3) zu übertragen.

7. Trommel (3) nach Anspruch 6, **dadurch gekennzeichnet, dass** eine Platte (11) mehrere Vorsprünge (14) aufweist, um die Motorantriebskraft mithilfe der Welle (5) auf die gesamte Trommel (3) zu übertragen.

8. Trommel (3) nach Anspruch 1 bis 7, die aus Kunststoffmaterial hergestellt ist.

## Revendications

1. Un tambour (3) pour placer le linge et un liquide de lavage, qui est mis en rotation par un moteur autour de son axe central dans une cuve (2) pour des machines à laver/sécher, comprenant un transmetteur de couple (4) comprenant un arbre (5) qui est entraîné par un moteur et un distributeur de couple (7) qui distribue l'entraînement de l'arbre à l'ensemble du tambour (3), qui est produit de manière à ne pas être séparé du matériau et revêtu avec celui-ci, encastré partiellement ou entièrement dans la paroi arrière du tambour et produit comme une seule pièce, où le distributeur de couple (7), qui transmet la puissance d'entraînement du moteur par l'arbre (5) à l'ensemble du tambour (3) avec l'aide de la paroi arrière, comprend plusieurs éléments angulaires de support de transmission (8) qui s'étendent à partir du centre où l'arbre (5) est disposé vers les côtés,
**caractérisé en ce que** le distributeur de couple (7) comprend une plaque (11) pour transmettre la puissance d'entraînement du moteur par l'arbre (5) à l'ensemble du tambour (3) avec l'aide de sa paroi arrière.

2. Un tambour (3) selon la Revendication 1, **caractérisé en ce que** le distributeur de couple (7), qui transmet la puissance d'entraînement du moteur par l'arbre (5) à l'ensemble du tambour (3) avec l'aide de sa paroi arrière, comprend un ou plusieurs éléments circulaires de support de transmission (9) qui empêchent la fissure du matériau le formant pendant la fabrication lorsque le matériau se transforme de phase liquide en phase solide.

3. Un tambour (3) selon les revendications de 1 à 2, **caractérisé par** le transmetteur de couple (4) présentant une ou plusieurs perforations (12) sur l'élément angulaire de support de transmission (8) et/ou l'élément circulaire de support de transmission (9) et/ou la plaque de raccordement (11) pour assurer que le distributeur de couple (7) ne se dégage pas et ne se détache pas du matériau formant et entourant lui-même (7).

4. Un tambour (3) selon les revendications de 1 à 3, **caractérisé en ce que** le transmetteur de couple (4) comprend une extension de positionnement de moule (10) sur le distributeur de couple (7) pour assurer son positionnement correct dans le moule.

5. Un tambour (3) selon les revendications de 1 à 4, **caractérisé en ce que** le transmetteur de couple (4) comprend une bague (6) préférablement en cuivre et présentant une surface lisse pour assurer l'installation de l'arbre (5) et de le distributeur de couple (7) l'un sur l'autre ou pour assurer la formation d'une marche sur l'arbre (5) pour assurer leur placement sur la cuve (2).

6. Un tambour (3) selon la Revendication 1, **caractérisé en ce que** la plaque (11) comprend plusieurs évidements (13) pour transmettre la puissance d'entraînement du moteur avec l'aide de l'arbre (5) à l'ensemble du tambour (3).

7. Un tambour (3) selon la Revendication 6, **caractérisé en ce qu'**une plaque (11) comprend plusieurs protubérances (14) pour transmettre la puissance d'entraînement du moteur avec l'aide de l'arbre (5) à l'ensemble du tambour (3).

8. Un tambour (3) selon les revendications de 1 à 7, qui est produit d'un matériau plastique.
